(19) **Europäisches Patentamt**
**European Patent Office**
**Office européen des brevets**

(11) **EP 2 177 729 B1**

(12) **FASCICULE DE BREVET EUROPEEN**

(45) Date de publication et mention
de la délivrance du brevet:
**01.03.2017 Bulletin 2017/09**

(51) Int Cl.:
*F01N 3/08* (2006.01)          *F01N 3/20* (2006.01)
*F01N 11/00* (2006.01)          *F02D 41/02* (2006.01)

(21) Numéro de dépôt: **09305925.1**

(22) Date de dépôt: **30.09.2009**

(54) **Procédé de commande de purge d'un piège à oxydes d'azote**

Verfahren zur Steuerung der Regeneration einer Stickoxidfalle

Method to control the purging of a Nitric oxygen trap

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **16.10.2008 FR 0857037**

(43) Date de publication de la demande:
**21.04.2010 Bulletin 2010/16**

(73) Titulaire: **Renault S.A.S.**
**92100 Boulogne-Billancourt (FR)**

(72) Inventeurs:
• **Leiglon, Nathalie**
**75014, Paris (FR)**
• **Ben-Cherif, Karim**
**92800, Puteaux (FR)**
• **Fresnet, François**
**92000, Nanterre (FR)**

(74) Mandataire: **Rougemont, Bernard et al**
**Renault s.a.s**
**Technocentre**
**Sce 00267 TCR GRA 2 36**
**1, Avenue du Golf**
**78288 Guyancourt (FR)**

(56) Documents cités:
**EP-A1- 1 083 306          WO-A2-2005/124113
FR-A1- 2 772 428          FR-A1- 2 794 804
FR-A1- 2 846 040          FR-A1- 2 856 741
US-A1- 2003 093 988**

**Description**

La présente invention concerne le domaine des pièges à oxydes d'azote pour véhicule automobile.

Plus précisément, l'invention concerne un procédé de commande de purge d'un piège à oxydes d'azote (NOx) pour moteur diesel de véhicule automobile en fonctionnement, comprenant des étapes consistant à :

- déterminer la teneur en oxydes d'azote stockés dans le piège à oxydes d'azote,
- comparer une fonction de la teneur en oxydes d'azote à une valeur de référence, et
- commander la purge du piège à oxydes d'azote en fonction du résultat de la comparaison.

Les oxydes d'azote sont ci-après appelés NOx, et un piège à oxydes d'azote NOx-trap.

Un piège à oxydes d'azote est un système de post-traitement des gaz d'échappement moteur qui fonctionne selon un principe différent des catalyseurs classiques (catalyseur 3 voies) : il permet de stocker les NOx en présence d'un excès d'oxygène (mélange pauvre) et de les réduire (purge du piège) en présence de réducteurs (mélange riche).

La structure d'un piège à NOx comprend classiquement :

- un monolithe, c'est-à-dire un support avec un très grand nombre de canaux parallèles, il peut être métallique ou en céramique,
- un revêtement "washcoat", c'est-à-dire un matériau poreux destiné à offrir une très grande surface spécifique permettant de favoriser les réactions catalytiques,
- des additifs du revêtement "washcoat", par exemple différents oxydes métalliques (Cerium, Nickel, Baryum...), qui permettent de stabiliser thermiquement le revêtement et favorisent les réactions de stockage d'oxygène et de NOx, et
- des métaux précieux en imprégnation dans le revêtement, ces métaux précieux actifs sont dispersés à la surface du revêtement "washcoat", les sites formés par ces métaux permettent de favoriser les différentes réactions qui sont à la base du fonctionnement du piège à NOx. Les métaux les plus couramment utilisés sont le Platine (Pt), le Palladium (Pd) et le Rhodium (Rh).

Le stockage des NOx se fait généralement en deux étapes.

D'abord l'oxyde d'azote NO est oxydé pour former du dioxyde d'azote $NO_2$.

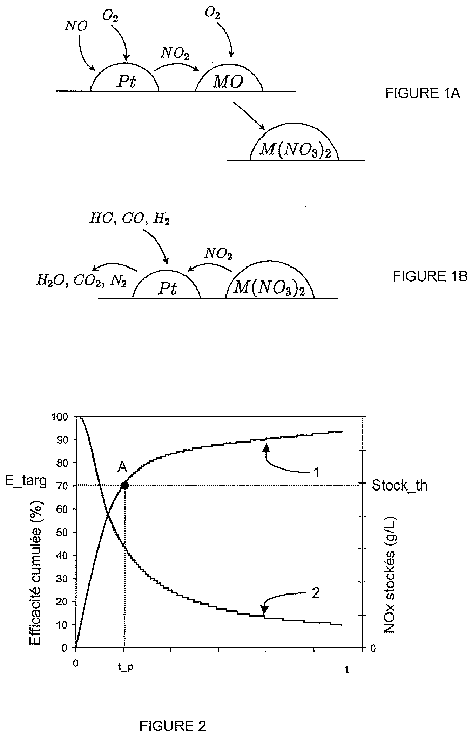

Ensuite celui-ci est adsorbé sur des sites d'oxydes métalliques (MO), selon le mécanisme illustré par la figure 1A.

La purge des NOx, illustrée figure 1B, est réalisée lors d'un passage en mélange riche, où l'absence d'oxygène favorise la décomposition des nitrates métalliques $M(NO_3)_2$ et la présence d'espèces réductrices (HC, CO, $H_2$) permet de traiter les NOx désorbés. Le passage en mélange riche peut se faire par exemple par injection tardive de carburant dans les cylindres ou par injection de reformât (réducteurs) directement à l'entrée du piège.

Un système de post-traitement des gaz d'échappement moteur comprenant un piège à NOx a un grand potentiel d'efficacité (supérieur à 80%), mais nécessite la mise en place de stratégies de gestion des passages en mélange riche.

Un procédé de commande de purge d'un piège à oxydes d'azote est connu de l'homme du métier, par exemple du document de l'état de la technique antérieure WO 03/031782 qui divulgue le déclenchement des purges en fonction d'un seuil de NOx stockés.

FR2794804 divulgue un autre procédé de purge de piège NOx.

Toutefois, le déclenchement des purges sur un seuil de NOx stockés ne permet pas d'optimiser le compromis consommation de carburant/émissions de polluants.

En effet, la plupart des véhicules automobiles doivent répondre à des contraintes réglementaires (normes) relatives notamment aux émissions de polluants, incluant les NOx, lesdites contraintes réglementaires pouvant varier d'un pays à l'autre.

Or pour respecter une contrainte réglementaire (cible à atteindre) dans toutes les conditions de roulage, le seuil de NOx stockés doit être calibré pour les conditions de roulage les pires, c'est-à-dire au plus bas. Mais cette calibration dite "pire cas" conduit finalement à des purges trop fréquentes, donc à une surconsommation de carburant, inutile, lorsque les conditions de roulage sont plus favorables que les conditions de la calibration "pire cas".

La présente invention a pour but de remédier à ces inconvénients en proposant une solution permettant d'améliorer le compromis consommation de carburant/ émissions de polluants.

Avec cet objectif en vue, le procédé selon l'invention, par ailleurs conforme au préambule cité ci-avant, est essentiellement caractérisé en ce que la valeur de référence est variable et dépend au moins de la température et de la vitesse volumétrique horaire,

et en ce que le moteur comprend un dispositif de by-pass du piège à oxydes d'azote et un reformeur, et dans lequel la commande de purge du piège à oxydes d'azote est fonction en outre de la température du reformeur,

le procédé comprenant en outre des étapes consistant à :

- enregistrer dans une mémoire une valeur cible, constante, de l'efficacité du piège à oxydes d'azote à atteindre,
- enregistrer un ensemble de valeurs de la température et de la vitesse volumétrique horaire, et

- établir, pour la valeur cible enregistrée, une cartographie représentant un ensemble de valeurs de référence, en fonction de l'ensemble des valeurs de la température et de la vitesse volumétrique horaire enregistrées.

Dans un mode de réalisation, le procédé selon l'invention comprend en outre des étapes consistant à :

- mesurer les valeurs de la température et de la vitesse volumétrique horaire instantanées, et
- déduire des valeurs instantanées mesurées et de la cartographie la valeur de référence.

Dans un mode de réalisation, la commande de purge du piège à oxydes d'azote est mise en oeuvre lorsque la fonction de la teneur en oxydes d'azote est égale à la valeur de référence pour les valeurs de la température et de la vitesse volumétrique horaire instantanées mesurées.

Dans un autre mode de réalisation, la commande de purge du piège à oxydes d'azote est mise en oeuvre lorsque la fonction de la teneur en oxydes d'azote est supérieure à la valeur de référence pour les valeurs de la température et de la vitesse volumétrique horaire instantanées mesurées et inférieure à une valeur maximale.

Alternativement, la commande de purge du piège à oxydes d'azote est mise en oeuvre lorsque la fonction de la teneur en oxydes d'azote est inférieure à la valeur de référence pour les valeurs de la température et de la vitesse volumétrique horaire instantanées mesurées et supérieure à une valeur minimale.

De préférence, la valeur de référence est un seuil correspondant à une teneur en oxydes d'azote stockés ou à une dérivée temporelle du stock d'oxydes d'azote, et la fonction de la teneur en oxydes d'azote est la fonction identité ou une dérivée temporelle.

Dans un mode de réalisation, le procédé selon l'invention comprend en outre une étape consistant à filtrer des valeurs instantanées de la température et de la vitesse volumétrique horaire pour établir la cartographie.

Avantageusement, le procédé selon l'invention comprend en outre une étape consistant à adapter la cartographie au vieillissement du moteur.

Dans un mode de réalisation, le moteur comprend un dispositif de by-pass du piège à oxydes d'azote et un reformeur, et la commande de purge du piège à oxydes d'azote est fonction en outre de la température du reformeur.

Grâce à l'invention, la valeur seuil de déclenchement de purge s'adapte aux conditions de roulage, c'est-à-dire aux paramètres moteur que sont la température, c'est-à-dire la température et le débit.

Grâce à l'invention, le piège n'est que très rarement purgé lorsque sa capacité maximale d'adsorption a été atteinte.

Grâce à l'invention, un même véhicule automobile peut être facilement adapté à tout type de réglementations en vigueur, sans modifications structurelles. A cet effet, il suffit de modifier l'efficacité cumulée que l'on vise à atteindre, et d'en déduire la nouvelle cartographie associée.

Selon un autre de ses objets, l'invention concerne également un programme d'ordinateur comprenant des instructions de code de programme pour l'exécution des étapes du procédé selon l'invention lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1A illustre le principe chimique du stockage des NOx,
- la figure 1B illustre le principe chimique de la purge des NOx,
- la figure 2 illustre la variation de l'efficacité cumulée et de la teneur en NOX en fonction du temps, pour un piège à NOx donné,
- la figure 3 illustre une cartographie selon l'invention,
- la figure 4A illustre un mode de réalisation du fonctionnement d'un moteur lors du stockage des NOx,
- la figure 4B illustre une mode de réalisation du fonctionnement d'un moteur lors de la purge des NOx,
- les figures 5A et 5B illustrent un mode de réalisation du procédé selon l'invention.

La figure 2 illustre le contexte dans lequel se situe l'invention.

Comme vu précédemment, la plupart des véhicules automobiles doivent répondre à des contraintes réglementaires (normes) relatives notamment aux émissions de polluants, incluant les NOx, lesdites contraintes réglementaires pouvant varier d'un pays à l'autre. Sur un profil de roulage réglementaire, les émissions de NOx en sortie d'échappement sont fixées par la réglementation en vigueur, ce qui impose par conséquent une efficacité globale du piège à NOx sur ce profil.

Une contrainte réglementaire correspond typiquement à une efficacité cumulée. C'est-à-dire que pour respecter la norme (locale) imposée, un véhicule ne doit pas dépasser une valeur donnée d'efficacité cumulée.

Selon l'invention, une étape, de préférence préalable, consiste donc à enregistrer dans une mémoire une valeur cible E_targ, constante, de l'efficacité cumulée du piège à oxydes d'azote à atteindre.

A titre purement illustratif, la valeur cible E_targ enregistrée est une efficacité cumulée de 70%.

Sur la figure 2, à température et débit fixés, on laisse le piège se charger au cours de temps, jusqu'à sa saturation tout en mesurant sa perte d'efficacité. Au cours du temps, d'une part la teneur en NOx stockés dans le piège augmente (courbe 1), et d'autre part l'efficacité cumulée du piège à NOx diminue (courbe 2).

Au bout d'un certain temps, au temps t_p (point A figure 2), l'efficacité cumulée est égale à la valeur cible E_targ enregistrée, au-delà de laquelle il n'est pas souhaitable d'aller. On en déduit la teneur en oxydes d'azote égale à une valeur seuil Stock_th. La valeur seuil Stock_th est alors une valeur de référence par rapport à laquelle il n'est pas souhaitable que la teneur en NOx du piège soit supérieure. Il est alors souhaitable d'effectuer une purge du piège lorsque la mesure du stock de NOx dans le piège atteint cette valeur de référence Stock_th.

Il est à noter que la figure 2 est obtenue à partir de mesures d'adsorption réalisées à température T fixée, c'est-à-dire la température des gaz en entrée du piège à oxydes d'azote ou la température de sortie moteur notamment quand le piège à oxydes d'azote est proche de la sortie du moteur ; et à débit (vitesse volumétrique horaire VVH) fixé, c'est-à-dire le débit d'air entrant cumulé au début de carburant.

On peut donc établir ainsi une relation entre une teneur en oxydes d'azote seuil Stock_th, et l'efficacité cumulée du piège c'est-à-dire la valeur cible E_targ. Autrement dit, pour garantir que le véhicule automobile ne dépasse pas la valeur cible E_targ, il est souhaitable que la teneur en NOx du piège soit inférieure à la valeur de référence seuil Stock_th.

Il est apparu de manière surprenante que pour une valeur cible E_targ donnée constante, c'est-à-dire pour une contrainte réglementaire donnée, la valeur de référence de la teneur en oxydes d'azote seuil Stock_th n'est pas constante comme illustré figure 2 mais dépend en fait (au premier ordre) au moins de la température et de la vitesse volumétrique horaire.

Ainsi, selon l'invention, on répète avantageusement les opérations réalisées pour l'obtention de la figure 2 en faisant varier la température T et la vitesse volumétrique horaire VVH.

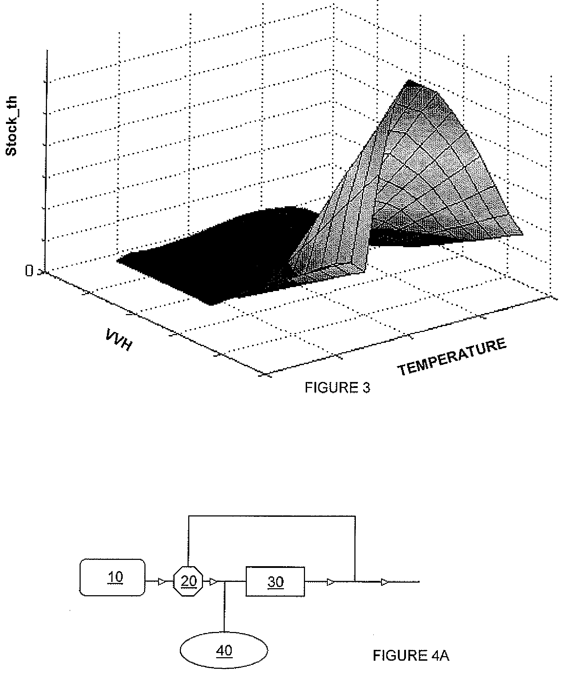

On établit ainsi, pour la valeur cible E_targ (constante) enregistrée, une cartographie représentant un ensemble de valeurs de référence de la teneur en oxydes d'azote seuil Stock_th, en fonction d'un ensemble de valeurs de la température T et de la vitesse volumétrique horaire VVH, illustrée figure 3.

Selon l'invention, on indexe donc le seuil Stock_th de déclenchement de la purge du piège sur les paramètres température T et vitesse volumétrique horaire VVH.

Toutefois, si dans un mode de réalisation la purge est déclenchée lorsque la fonction de la teneur en oxydes d'azote est égale à la valeur de référence Stock_th pour les valeurs de la température T et de la vitesse volumétrique horaire VVH instantanées mesurées, dans d'autres modes de réalisation, on peut anticiper l'atteinte du seuil Stock_th ou au contaire dépasser ce seuil.

A cet effet, dans un mode de réalisation, la commande de purge du piège à oxydes d'azote est mise en oeuvre lorsque la teneur en oxydes d'azote est supérieure à la valeur de référence Stock_th pour les valeurs de la température et de la vitesse volumétrique horaire instantanées mesurées, et inférieure à une valeur maximale.

Ce mode de réalisation consiste à dépasser le seuil et attendre un certain temps avant de déclencher la purge, par exemple lorsque la concentration instantanée de NOx est élevée, par exemple en phase d'accélération. Dans ce cas, il est souhaitable d'attendre la fin de la phase d'accélération pour déclencher la purge. Le temps d'attente (correspondant à la valeur maximale définie ci-dessus) au-delà du seuil pour déclencher la purge peut donc être constant et prédéterminé, ou variable, indexé par exemple à la valeur instantanée de la concentration en NOx, à l'accélération longitudinale du véhicule, à la détection de la position de pédale d'accélération, etc.

De même, dans un autre mode de réalisation, la commande de purge du piège à oxydes d'azote est mise en oeuvre lorsque la teneur en oxydes d'azote est inférieure à la valeur de référence Stock_th, pour les valeurs de la température et de la vitesse volumétrique horaire instantanées mesurées, et supérieure à une valeur minimale.

Ce mode de réalisation consiste à anticiper l'atteinte du seuil Stock_th pour déclencher la purge, par exemple lorsque la concentration instantanée de NOx est faible, par exemple en faible charge (levée de pied, ralenti...). Le temps d'anticipation (correspondant à la valeur minimale définie ci-dessus) en-deçà du seuil Stock_th pour déclencher la purge peut donc être constant et prédéterminé, ou variable, indexé par exemple à la valeur instantanée de la concentration en NOx, à l'accélération longitudinale du véhicule, la détection d'une levée de pied du conducteur, etc.

Toutefois, de sorte à ce que des variations instantanées ne déclenchent pas de commande de purge intempestive, le procédé selon l'invention comprend avantageusement en outre une étape consistant à filtrer les valeurs instantanées de la température et de la vitesse volumétrique horaire mesurées pour établir la cartographie, ce qui permet de lisser lesdites valeurs instantanées, par exemple par des moyennes sur des fenêtres temporelles glissantes, ou plus généralement par tout filtre linéaire ou non linéaire, et en l'espèce un filtre récursif d'ordre deux, un tel filtre permettant moins de calcul et un temps de calcul indépendant de la fréquence de coupure choisie.

En outre, pour tenir compte de la dégradation du matériau du piège, qui conduit à une perte d'efficacité du piège, on peut adapter la cartographie au vieillissement du moteur, c'est-à-dire introduire un facteur correctif multiplicatif k (k<1) sur la cartographie seuil=f(T,VVH) du matériau frais.

Ainsi, on conserve la forme de la cartographie qui reflète le comportement physique du piège avec la température et le débit, tout en traduisant que pour une même efficacité obtenue, un piège vieilli doit être purgé plus souvent qu'un piège frais.

La valeur du facteur correctif k peut être forfaitaire, par exemple en fonction du kilométrage, ou adaptative, par exemple en fonction du vécu du piège (vieillissement au souffre, vieillissement thermique, etc.).

Par exemple, on peut mettre en oeuvre le modèle de chargement suivant à partir d'un forfait kilométrique ou d'un observateur de vieillissement basé sur deux capteurs NOx amont/aval par rapport au piège.

Soit le modèle :

$$\begin{cases} \dfrac{d\theta}{dt} = f(\theta, X_{nox}^{in}, q_{ech}, T, \lambda) \\ X_{nox}^{OUT} = g(\theta, X_{nox}^{in}, q_{ech}, T, \lambda) \end{cases}$$

un système algébro-différentielle décrivant le stockage et la concentration des NOx en sortie du piège où :

- $\theta$ est le stock de NOx dans le piège,
- $X^{IN}$, $X^{OUT}$ la concentration des NOx en entrée et sortie du piège respectivement ($X^{IN}$ mesure ou estimation en sortie du moteur),
- $\lambda$ un paramètre sensible au vieillissement,
- $T$ la température du piège, et
- $q_{ech}$ le débit d'échappement en sortie du moteur.

Il est possible alors en utilisant un observateur ou un estimateur par exemple de type Kalman, ou un observateur d'entrée de reconstruire le paramètre sensible au vieillissement $\lambda$. Dans un mode de réalisation, $\lambda = k$.

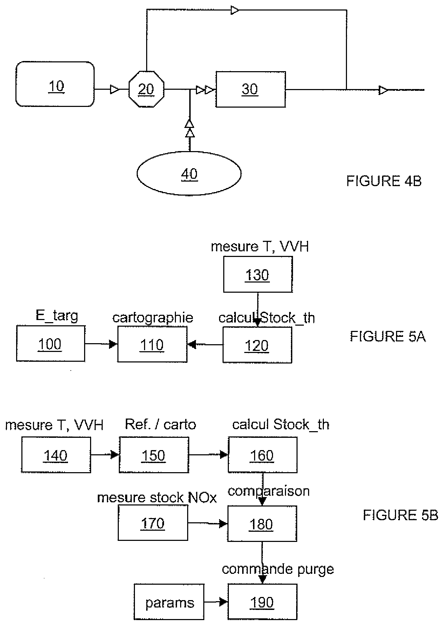

Le fonctionnement d'un piège pour véhicule automobile équipé d'un moteur 10, d'un dispositif de by-pass 20 du piège à oxydes d'azote 30, et d'un reformeur 40 est illustré aux figures 4A et 4B.

Dans ce mode de réalisation, la commande de purge du piège à oxydes d'azote 30 est mise en oeuvre par injection de reformat, et peut être fonction en outre de la température du reformeur.

Le reformat est un mélange riche en hydrogène $H_2$ et monoxyde de carbone CO produit par un reformeur à partir d'un mélange d'air et de fuel. La technique de reformage peut par exemple être la technique dite "POx" (Partial Oxydation) catalytique du fuel.

Hors purge (figure 4A), les gaz d'échappement, symbolisés par une simple flèche, passent du moteur 10 vers le piège à oxydes d'azote 30 à travers le dispositif de by-pass 20, puis continuent le long de la ligne d'échappement.

En purge (figure 4B) les gaz d'échappement passent du moteur 10 vers le dispositif de by-pass 20 puis continuent le long de la ligne d'échappement sans passer par le piège à oxydes d'azote 30. Pendant ce temps, le reformat, symbolisé par des doubles flèches, est injecté dans le piège à oxydes d'azote 30 par le reformeur 40.

Simultanément à l'injection de reformat, les gaz d'échappement sont donc détournés du piège grâce au système de by-pass. Le by-pass du piège sert à utiliser les espèces réductrices $H_2$ et CO exclusivement pour la réduction des NOx, sans qu'elles soient consommées inutilement par l'oxygène des gaz d'échappement.

Aussi, les gaz détournés du piège pendant la purge ne sont pas traités par ce dernier pendant la durée de la purge. Par conséquent, afin d'avoir le minimum de pénalités liées au by-pass du piège, il est souhaitable de déclencher les purges sur des points faiblement chargés en polluants, notamment en NOx, comme décrit précédemment. A cet effet, l'utilisation de la position pédale et du point de fonctionnement moteur pour détecter les conditions à faibles émissions de polluants, favorables au by-pass ont été décrites dans une demande de brevet antérieure déposée par la demanderesse.

Pour obtenir un rendement optimal pendant la phase de reformage, le reformeur doit être de préférence préalablement mis en température. Selon un mode de réalisation de l'invention, la commande de purge du piège à oxydes d'azote est donc fonction en outre de la température du reformeur.

Cette phase de mise en température est consommatrice en carburant, mais si le reformeur est utilisé de façon assez fréquente, il n'a pas le temps de se refroidir suffisamment, et les phases de mise en température sont moins consommatrices en carburant.

Par exemple, en combinaison avec le mode de réalisation consistant à anticiper l'atteinte du seuil Stock_th pour déclencher la purge, si le seuil de NOx stockés Stock_th n'est pas encore atteint, mais que la brique de reformage commence à se refroidir, la purge peut quand même être déclenchée.

Le procédé selon l'invention est illustré aux figures 5A et 5B.

Dans une première phase, figure 5A, on établit une cartographie 110 représentant un ensemble de valeurs de référence, en fonction de l'ensemble des valeurs de la température et de la vitesse volumétrique horaire enregistrées.

Cette cartographie est établie grâce à l'enregistrement 100 préalable d'une valeur cible E_targ, constante, correspondant à l'efficacité (cumulée) du piège à oxydes d'azote à atteindre, et au calcul 120 du seuil Stock_th de NOx stockés qu'il est souhaitable de ne pas dépasser, à partir de la mesure et de l'enregistrement 130 d'un ensemble de valeurs de la température T et de la vitesse volumétrique horaire VVH par un calculateur qui détermine également la teneur des NOx stockés dans le piège.

Dans une deuxième phase, figure 5B, une fois la cartographie établie, le procédé selon l'invention comprend une étape consistant à mesurer 140 les valeurs de la température T et de la vitesse volumétrique horaire VVH instantanées (toujours par le calculateur). De ces mesures, on en déduit 150 par la cartographie la valeur de référence Stock_th 160, c'est-à-dire le point ayant pour coordonnées les valeurs des dites mesures.

La valeur Stock_th est de préférence enregistrée dans une mémoire.

Par ailleurs, on détermine (par mesure ou estimation) 170 la teneur des NOx stockés dans le piège. On compare 180 alors la teneur des NOx stockés dans le piège à la valeur de référence, et on commande 190 la purge du piège à oxydes d'azote en fonction du résultat de la comparaison

Comme vu précédemment, le déclenchement de la purge 190 peut être modulé par des paramètres tels que par exemple la température du reformeur, la position de la pédale, etc.

Pour des raisons de clarté, la valeur de référence (Stock_th) a été décrite comme essentiellement une teneur en oxydes d'azote stockés seuil, toutefois, cette valeur de référence peut être une dérivée temporelle du stock d'oxydes d'azote, auquel cas la fonction de la teneur en oxydes d'azote une dérivée temporelle.

## Revendications

1. Procédé de commande de purge d'un piège à oxydes d'azote (NOx) pour moteur diesel (10) de véhicule automobile, comprenant des étapes consistant à :

    - déterminer (170) la teneur en oxydes d'azote stockés dans le piège à oxydes d'azote,
    - comparer (180) une fonction de la teneur en oxydes d'azote à une valeur de référence (Stock_th), et
    - commander (190) la purge du piège à oxydes d'azote en fonction du résultat de la comparaison,

    caractérisé en que la valeur de référence (Stock_th) est variable et dépend au moins de la température et de la vitesse volumétrique horaire, et en ce que le moteur comprend un dispositif de by-pass (20) du piège à oxydes d'azote et un reformeur (40), et dans lequel la commande de purge du piège à oxydes d'azote est fonction en outre de la température du reformeur,

    le procédé comprenant en outre des étapes consistant à :

    - enregistrer (100) dans une mémoire une valeur cible (E_targ), constante, de l'efficacité du piège à oxydes d'azote à atteindre,
    - enregistrer (130) un ensemble de valeurs de la température et de la vitesse volumétrique horaire, et
    - établir (110), pour la valeur cible enregistrée (E_targ), une cartographie représentant un ensemble de valeurs de référence, en fonction de l'ensemble des valeurs de la température et de la vitesse volumétrique horaire enregistrées.

2. Procédé selon la revendication 1, comprenant en outre des étapes consistant à :

    - mesurer (140) les valeurs de la température et de la vitesse volumétrique horaire instantanées, et
    - déduire (150) des valeurs instantanées mesurées et de la cartographie la valeur de référence (Stock_th).

3. Procédé selon la revendication 2, dans lequel la commande de purge du piège à oxydes d'azote est mise en oeuvre lorsque la teneur en oxydes d'azote est égale à la valeur de référence (Stock_th) pour les valeurs de la température et de la vitesse volumétrique horaire instantanées mesurées.

4. Procédé selon la revendication 2, dans lequel la commande de purge du piège à oxydes d'azote est mise en oeuvre lorsque la teneur en oxydes d'azote est supérieure à la valeur de référence (Stock_th) pour les valeurs de la température et de la vitesse volumétrique horaire instantanées mesurées et inférieure à une valeur maximale.

5. Procédé selon la revendication 2, dans lequel la commande de purge du piège à oxydes d'azote est mise en oeuvre lorsque la fonction de la teneur en oxydes d'azote est inférieure à la valeur de référence (Stock_th) pour les valeurs de la température et de la vitesse volumétrique horaire instantanées mesurées et supérieure à une valeur minimale.

6. Procédé selon l'une quelconque des revendications précédentes, dans lequel la valeur de référence (Stock_th) est une teneur en oxydes d'azote stockés seuil ou une dérivée temporelle du stock d'oxydes d'azote, et dans lequel la fonction de la teneur en oxydes d'azote est la fonction identité ou une dérivée temporelle.

7. Procédé selon l'une quelconque des revendications précédentes, comprenant en outre une étape consistant à filtrer des valeurs instantanées de la température et de la vitesse volumétrique horaire pour établir la cartographie.

8. Procédé selon l'une quelconque des revendications précédentes, comprenant en outre une étape consistant à adapter la cartographie au vieillissement du moteur.

9. Programme d'ordinateur comprenant des instructions de code de programme pour l'exécution des étapes du procédé selon l'une quelconque des revendications précédentes lorsque ledit programme est exécuté sur un ordinateur.

**Patentansprüche**

1. Verfahren zur Steuerung der Regeneration einer Stickoxidfalle (NOx-Falle) für einen Dieselmotor (10) eines Kraftfahrzeugs, welches Schritte umfasst, die in Folgendem bestehen:

   - Bestimmen (170), des Gehalts an Stickoxiden, die in der Stickoxidfalle gespeichert sind;
   - Vergleichen (180) einer Funktion des Gehalts an Stickoxiden mit einem Referenzwert (Stock_th), und
   - Steuern (190) der Regeneration der Stickoxidfalle in Abhängigkeit vom Ergebnis des Vergleichs,

   **dadurch gekennzeichnet, dass** der Referenzwert (Stock_th) variabel ist und wenigstens von der Temperatur und von der Raumgeschwindigkeit pro Stunde abhängt, und
   dadurch, dass der Motor eine Vorrichtung zur Umgehung (20) der Stickoxidfalle und einen Reformer (40) umfasst, und wobei die Steuerung der Regeneration der Stickoxidfalle außerdem von der Temperatur des Reformers abhängig ist,
   wobei das Verfahren außerdem Schritte umfasst, die in Folgendem bestehen:

   - Speichern (100) eines konstanten Zielwertes (E_targ) des Wirkungsgrades der Stickoxidfalle, der erreicht werden soll, in einem Speicher,
   - Speichern (130) einer Menge von Werten der Temperatur und der Raumgeschwindigkeit pro Stunde, und
   - Erstellen (110), für den gespeicherten Zielwert (E_targ), eines Kennfeldes, das eine Menge von Referenzwerten in Abhängigkeit von der Menge der gespeicherten Werte der Temperatur und der Raumgeschwindigkeit pro Stunde darstellt.

2. Verfahren nach Anspruch 1, welches Schritte umfasst, die in Folgendem bestehen:

   - Messen (140) der momentanen Werte der Temperatur und der Raumgeschwindigkeit pro Stunde, und
   - Ableiten (150) des Referenzwertes (Stock_th) aus den gemessenen momentanen Werten und dem Kennfeld.

3. Verfahren nach Anspruch 2, wobei die Steuerung der Regeneration der Stickoxidfalle durchgeführt wird, wenn der Gehalt an Stickoxiden gleich dem Referenzwert (Stock_th) für die gemessenen momentanen Werte der Temperatur und der Raumgeschwindigkeit pro Stunde ist.

4. Verfahren nach Anspruch 2, wobei die Steuerung der Regeneration der Stickoxidfalle durchgeführt wird, wenn der Gehalt an Stickoxiden größer als der Referenzwert (Stock_th) für die gemessenen momentanen Werte der Temperatur und der Raumgeschwindigkeit pro Stunde und kleiner als ein maximaler Wert ist.

5. Verfahren nach Anspruch 2, wobei die Steuerung der Regeneration der Stickoxidfalle durchgeführt wird, wenn die Funktion des Gehalts an Stickoxiden kleiner als der Referenzwert (Stock_th) für die gemessenen momentanen Werte der Temperatur und der Raumgeschwindigkeit pro Stunde und größer als ein minimaler Wert ist.

6. Verfahren nach einem der vorhergehenden Ansprüche, wobei der Referenzwert (Stock_th) ein Schwellenwert des Gehalts an gespeicherten Stickoxiden oder eine zeitliche Ableitung des Stickoxidspeichers ist, und
   wobei die Funktion des Gehalts an Stickoxiden die Identitätsfunktion oder eine zeitliche Ableitung ist.

7. Verfahren nach einem der vorhergehenden Ansprüche, welches außerdem einen Schritt umfasst, der darin besteht, momentane Werte der Temperatur und der Raumgeschwindigkeit pro Stunde zu filtern, um das Kennfeld zu erstellen.

8. Verfahren nach einem der vorhergehenden Ansprüche, welches außerdem einen Schritt umfasst, der darin besteht, das Kennfeld an die Alterung des Motors anzupassen.

9. Computerprogramm, welches Programmcodeanweisungen zur Ausführung der Schritte des Verfahrens nach einem der vorhergehenden Ansprüche, wenn das Programm auf einem Computer ausgeführt wird, umfasst.

**Claims**

1. Method for controlling the purging of a nitrogen oxides (NOx) trap for motor vehicle diesel engine (10), comprising steps consisting in:

   - determining (170) the content of nitrogen oxides stored in the nitrogen oxides trap,
   - comparing (180) a function of the nitrogen oxides content with a reference value (stock_th), and
   - commanding (190) the purging of the nitrogen oxides trap as a function of the result of the comparison,

   **characterized in that** the reference value (stock_th) is variable and dependent at least on the temperature and on the hourly volumetric rate, and
**in that** the engine comprises a nitrogen oxides trap bypass device (20) and a reformer (40), and in which the command to purge the nitrogen oxides trap is also a function of the temperature of the reformer, the method further comprising steps consisting in:

> - recording (100) in a memory a constant target value ((E_targ) for the nitrogen oxides trap efficiency to be achieved,
> - recording (130) a set of values of the temperature and of the hourly volumetric rate, and
> - establishing (110), for the recorded target value (E_targ), a map representing a set of reference values, as a function of the set of recorded values of temperature and of hourly volumetric rate.

2. Method according to Claim 1, further comprising steps consisting in:

> - measuring (140) the instantaneous values of the temperature and of the hourly volumetric rate, and
> - deducing (150) the reference value (Stock_th) from the measured instantaneous values and from the map.

3. Method according to Claim 2, in which the command to purge the nitrogen oxides trap is issued when the nitrogen oxides content is equal to the reference value (Stock_th) for the measured instantaneous values for the temperature and the hourly volumetric rate.

4. Method according to Claim 2, in which the command to purge the nitrogen oxides trap is issued when the nitrogen oxides content is greater than the reference value (Stock_th) for the measured instantaneous values of the temperature and of the hourly volumetric rate and less than a maximum value.

5. Method according to Claim 2, in which the command to purge the nitrogen oxides trap is issued when the function of the nitrogen oxides content is less than the reference value (Stock_th) for the measured instantaneous values of the temperature and of the hourly volumetric rate and greater than a minimum value.

6. Method according to any one of the preceding claims, in which the reference value (Stock_th) is a threshold stored nitrogen oxides content or a derivative with respect to time of the stock of nitrogen oxides, and in which the function of the nitrogen oxides content is the identity function or a derivative with respect to time.

7. Method according to any one of the preceding claims, further comprising a step of filtering instantaneous values of the temperature and of the hourly volumetric rate in order to establish the map.

8. Method according to any one of the preceding claims, further comprising a step consisting in adapting the map to the aging of the engine.

9. Computer program comprising program code instructions for executing the steps of the method according to any one of the preceding claims when the said program is executed on a computer.

FIGURE 1A

FIGURE 1B

FIGURE 2

FIGURE 3

FIGURE 4A

FIGURE 4B

FIGURE 5A

FIGURE 5B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03031782 A
- FR 2794804